Europäisches Patentamt

European Patent Office

Office européen des brevets

(11) Publication number: **0 272 039**
**A2**

# EUROPEAN PATENT APPLICATION

(21) Application number: **87310796.5**

(51) Int. Cl.⁴: **H01R 13/52**

(22) Date of filing: **09.12.87**

(30) Priority: **19.12.86 US 943767**

(43) Date of publication of application:
**22.06.88 Bulletin 88/25**

(84) Designated Contracting States:
**DE FR GB SE**

(71) Applicant: **AMERICAN TELEPHONE AND
TELEGRAPH COMPANY
550 Madison Avenue
New York, NY 10022(US)**

(72) Inventor: **Pasternak, John Paul
240 Bee Meadow Parkway
Whippany New Jersey 07981(US)**

(74) Representative: **Johnston, Kenneth Graham et
al
Western Electric Company Limited 5
Mornington Road .
Woodford Green Essex, IG8 OTU(GB)**

(54) **Apparatus having electrical connections embedded in a potting compound.**

(57) Electrical connections, such as a conductor (16) connected to a terminal (12) housed within a terminal block (10) are first covered with an insulative granular substance (18) like quartz. Then a potting compound (23) is poured over the granular substance. The granular substance prevents forces from expansion and contraction of the potting compound from severing the conductor when the terminal block is exposed to severe temperature variations.

EP 0 272 039 A2

# APPARATUS HAVING ELECTRICAL CONNECTIONS EMBEDDED IN A POTTING COMPOUND

## Technical Field

This invention relates to apparatus having electrical connections that are embedded in a potting compound to prevent exposure of the connections to moisture.

## Background of the Invention

Some electrical connections, such as terminals blocks, loading coils, and the like, in a telecommunications lines are exposed to moisture. Moisture, however, degrades the transmission characteristics of the telecommunications line. The connections are embedded, therefore, in a potting compound.

The potting compound surrounding the electrical is subject to wide temperature variations which may range from below -40 degrees Centigrade to above 61 degrees Centigrade. At low temperatures, forces resulting from the shrinking potting compound compress the two arms of a split beam terminal, in one example, towards each other, severing a conductor lodged therebetween. In some cases, the two arms are warped and the electrical conductor is no longer in contact with the two arms. At higher temperatures when the potting compound expands, forces resulting from the expanding potting compound beneath, move the conductor upwards. Electrical connection no longer exists.

In another example, when a load coil is inserted in a circuit, a conductor form the load coil extends from the coil for external termination. The load coil is often embedded in a potting compound to prevent its exposure to moisture. If unsufficient slack is not provided for the conductor leaving the load coil, the forces from contraction and expansion of the potting compound sever the conductor and electrical continuity no longer exists.

## Summary of the Invention

Electrical continuity substantially at a connection between an electrical conductor and an electrical device which are embedded in a potting compound is preserved by first surrounding the connection with a granular substance and then pouring potting compound over the granular substance. The granular substance prevents forces from expansion or contraction of the potting compound from either severing the conductor, or damaging either the connecting device or connection.

More particularly, in one embodiment, a granular substance such as quartz, ceramic coated quartz, glass and the like, is poured into a terminal block which has side walls defining an inner space surrounding a plurality of terminals projecting into the inner space from a base. The granular substance just covers the top of the terminals for maximum protection. If maximum protection is not needed, however, it is necessary that the granular substance cover only the joint between the electrical conductor and the electrical terminal.

Potting compound, for example from the family of polyurethanes is then poured over the granular substance up to the tope of the side walls. The potting compound fills the interstices of the granular substance. The granular substance prevents forces from the contraction or expansion of the potting compound from electrically damaging the connection between the conductors at the terminals.

Alternatively, instead of first covering the electrical connections with a granular substance and then pouring a potting compound over the granular substance, the granular substance and the potting compound may be poured at the same time, thus, the two being mixed together.

A major advantage of using a mixture of granular substances and potting compound results in the overall reduction of the coefficient of thermal expansion, thereby avoiding failures resulting from the use potting compound alone.

## Brief Description of the Drawing

FIG. 1 shows a terminal block with a granular substance covering the terminals;

FIG. 2 shows the terminal block with the granular substance and a potting compound;

FIG. 3 shows a second embodiment of the terminal block with sand and potting compound being poured simultaneously into the terminal block;

FIG. 4 shows graphs comparing shrinkage of a potting compound in the terminal block with and without a granular substance;

FIG. 5 shows a terminal block in partial section;

FIG. 6 shows the terminal block of FIG. 5 filled with a potting compound;

FIG. 7 shows a plan view of a load coil; and

FIG. 8 shows an enclosure for many load coils..DD

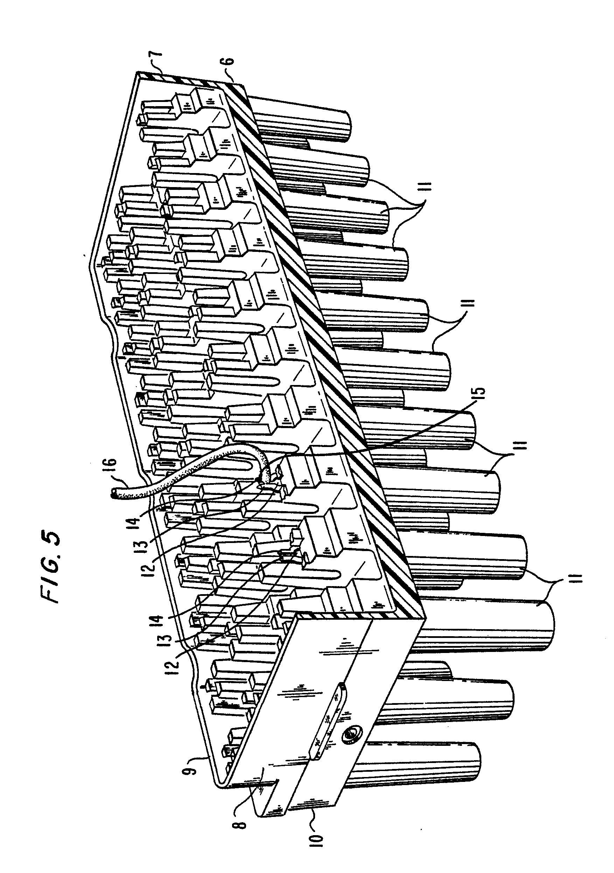

Referring to FIG. 5, there is shown a terminal block 10 in partial section. Terminal block 10, made from a material which is a good electrical insulator, has a plurality of terminals 12 secured within supporting members 11. Supporting members 11 are built integrally with terminal block 10. Terminal block 10 is shown having base 6 and walls, three of which, 7,8, and 9, are shown. The fourth wall is not shown because of the sectioning.

Each of two supporting members 11 is sectioned to reveal a split beam terminal 12 which is made from a good electrical conductive material. The end of each terminal 12 is split into two prongs 13 and 14 between which a conductor is lodged. Typically, an insulated conductor is placed between elements 13 and 14 and a tool is used to urge the conductor downwards into gap 15. Elements 13 and 14 strip the insulation and make electrical contact with the conductor.

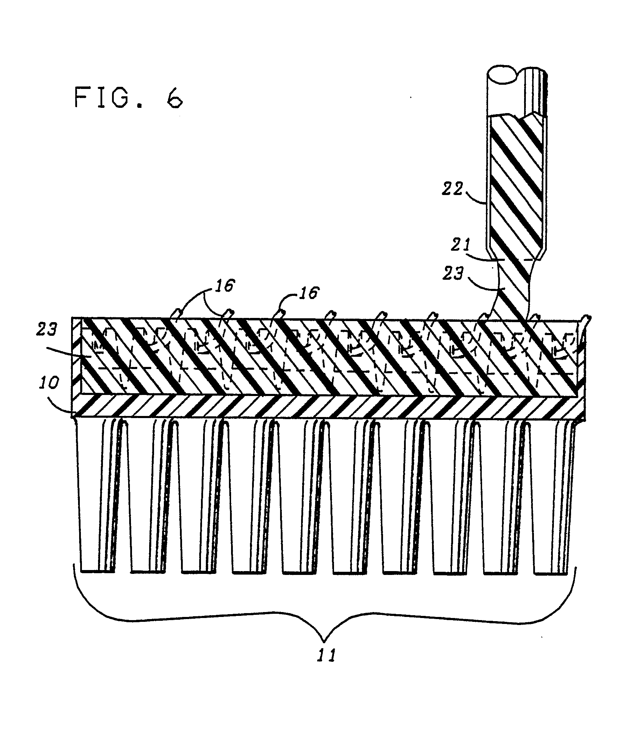

In the prior art, referring to Figs. 5 and 6, after the conductors had been connected to the terminals, a potting compound would be poured over the terminals up to the top of the walls. When terminal block 10 is exposed to reduced temperatures, often down to about -40 degrees Centigrade the potting compound would shrink. Forces caused by the shrinking potting compound would force prongs 13 and 14 together, sometimes severing conductor 16 and losing electrical continuity so as to produce an open circuit. In another case, elements 13 and 14 would be warped away from conductor 16, producing an open circuit.

Terminal block 10 is exposed also to high temperatures, often to about 61 degrees Centigrade. When the temperature warms up, the potting compound expands in all directions. The outer layers of the potting compound is softened before the inside. Thus, expansion of the potting compound causes the release first of forces on the extremities of prongs 13 and 14 before the junction of the two prongs. Furthermore, the expansion of the potting compound in the upward direction exerts a subsequent force under conductor 16 urging it upwards and away from prongs 13 and 14.

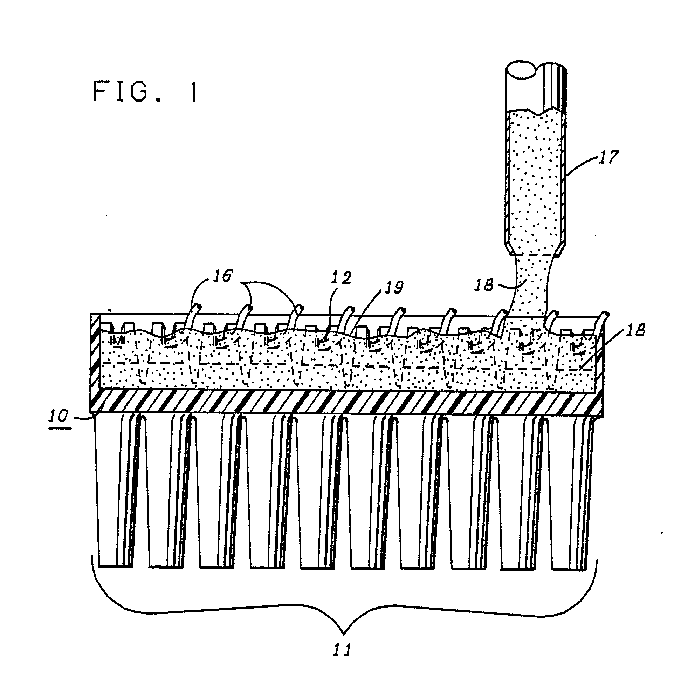

FIG. 1 discloses terminal block 10, similar to that of FIG. 5, wherein conductors 16 are connected to split beam terminals within supporting members 11. Prior to encapsulating the connections in a potting compound as in FIG. 6, however, a granular substance 18 is poured over terminals 12 so as to cover at least the electrical connections of conductors 16 to terminals 12. For maximum protection, however, the tops of the terminals should be covered with the granular substance.

The granular substance selected is a good electrical insulator. It is non-corrosive and is a fire-retardant. The granular substance has a low coefficient of thermal expansion and has a low factor moisture absorption. The granular substance is also such a material as could be provided in a wide range of sizes, the surface being either smooth or rough. Some examples of such granular substances are quartz, glass, mica and quartz that is first heated to expel moisture and then coated with a ceramic.

The size of the granular substance depends on the depth of pour. This means that the greater the distance from the top 19 of the granular substance 18, in terminal block 10 of FIG. 1, to the bottom-most level to be embedded by the potting compound, the larger must be the size of the granular substance. Otherwise, the potting compound may not penetrate the lowest levels of the granular substance.

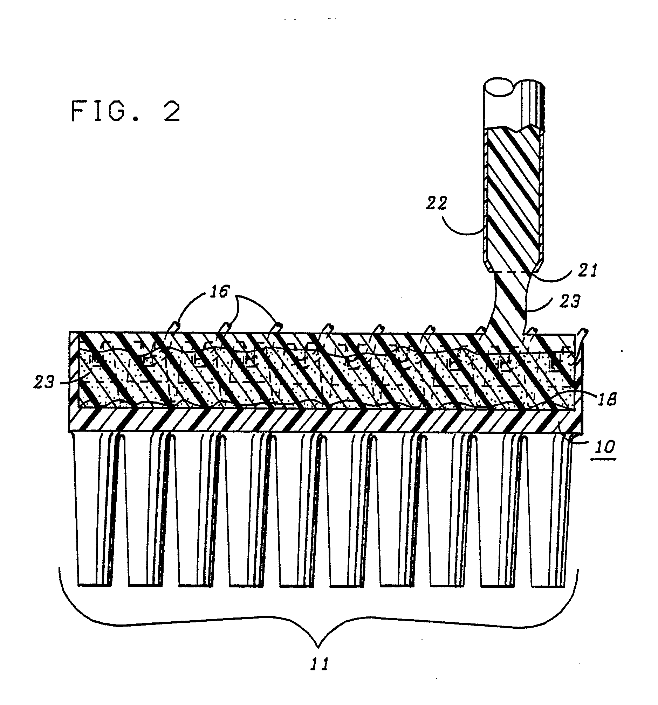

FIG. 2 shows potting compound 23 being released from dispensing means 22 and entering terminal block 10 which had previously been filled with granular substance 18. The potting compounds fills the interstices of granular substance 18. In one example, about sixty percent of the space surrounding split terminals 12 of terminal block 10 was filled with granular substance and the remaining forty percent was filled with potting compound. After many experiments, it was found that potting compound suitably fills interstices as small as half a millimeter. This percentage distribution between granular substance and potting compound can be varied, the percentage being only illustrative and not limiting.

Granular substance 18 serves two functions: it reduces the harmful effect of the volume expansion and contraction of the potting compound; and, granular substance being less expensive than potting compound, the more granular substance being used, the less expensive the product.

In the preferred embodiment, the potting compound used as an encapsulant is a member from the family of polyurethanes. The polyurethane used is prepared by mixing approximately nine parts of hardener to approximately sixteen parts of resin in an environment free from moisture and oxygen. In the preferred embodiment the environment used is nitrogen. The polyurethane is then poured, as shown in FIG. 2, at room temperature. Upon leaving means 22, the polyurethane reacts with oxygen in the atmosphere and an exothermic reaction takes place. The polyurethane sets in a few minutes.

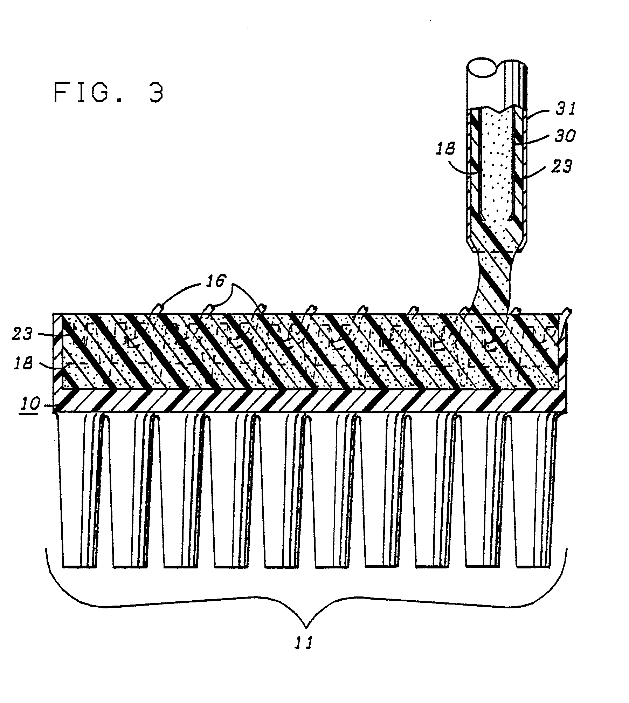

FIG. 3 shows a dispensing means having inner means 30 within an outer means 31. Granular substance 18 flows through inner means 30 and potting compound 23 flows within outer means 31. Granular substance 18 mixes with potting compound 23 at the point of exit from means 30 and 31 respectively and during the fall into terminal block 10. In this second method, the size of granular substance 18 is not significant with respect to the depth of potting compound fill. The only requirement is that granular substance 18 be of sufficient size as not to float to the top of terminal block 10.

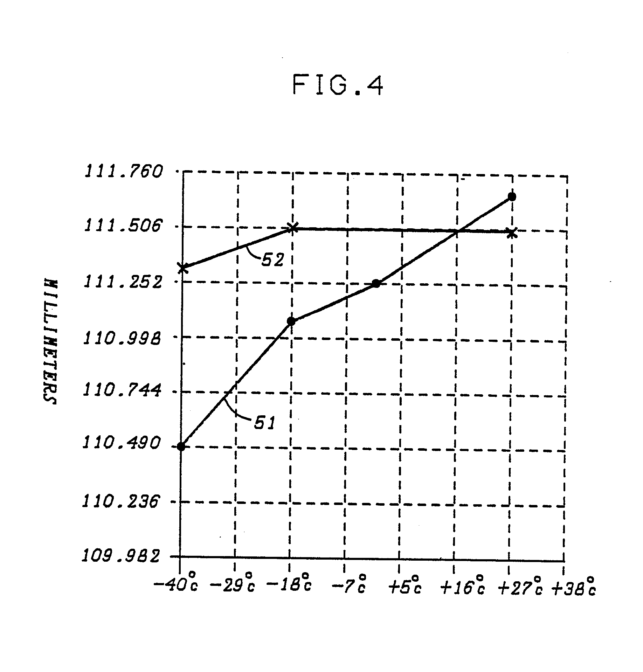

The shrinkage, over a wide range of temperatures, of potting compound 23 within terminal block 10 of FIG. 2 is shown by line 51 in FIG. 4. By comparison, the shrinkage, over the same range of temperatures, of a mixture of granular substance 18 with potting compound 23 within terminal block 10 of FIG. 2 is shown by line 52 in FIG. 4. Line 52 shows that the coefficient of the overall thermal expansion remains substantially constant over a wide range of temperatures. As the temperature drops below zero degrees, there is a small change in the coefficient of the overall thermal expansion. This change, however, is substantially smaller than that when granular substance 18 is not mixed with potting compound 23.

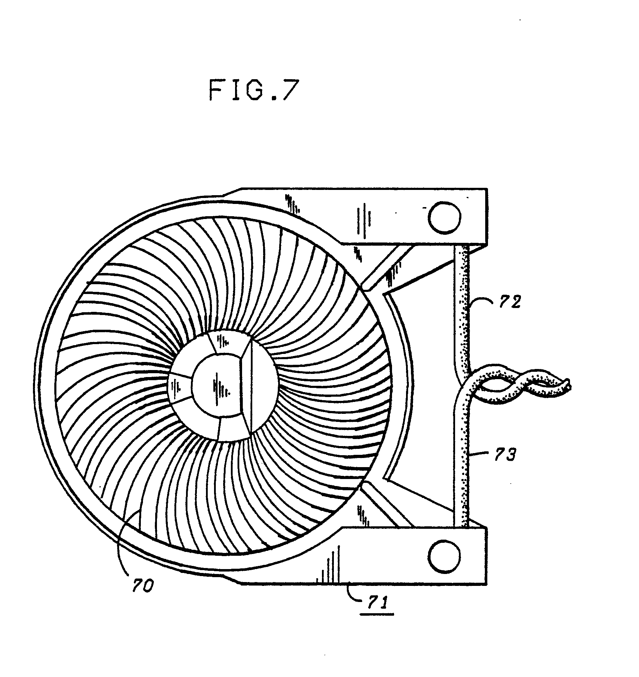

FIG. 7 shows a plan view of load coil 70 within an enclosure 71 with the top cover removed. Leads 72 and 73 leave the coil enclosure.

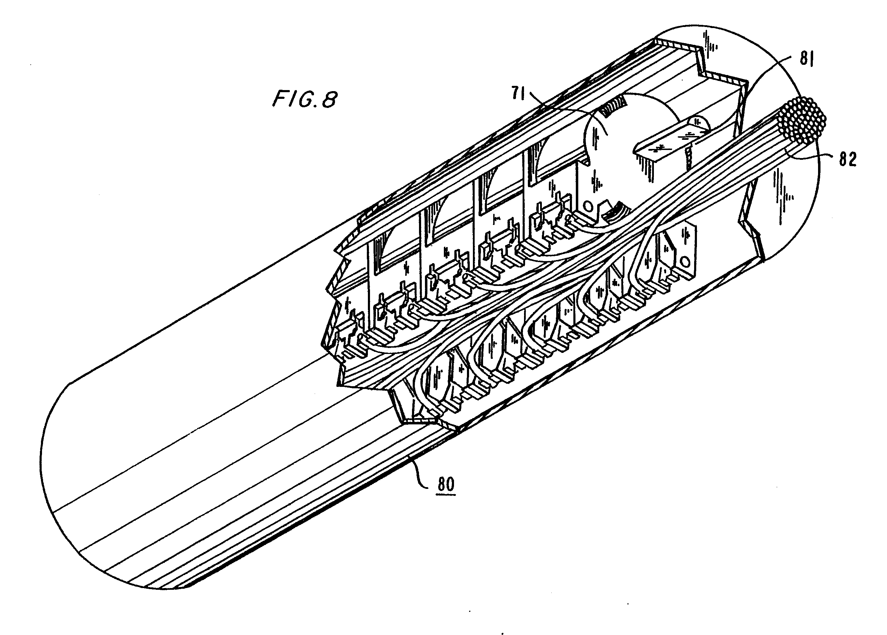

FIG. 8 shows a stack of load coils and housing 71 on a spindle 81 secured between the top and bottom of a cylindrical drum enclosure 80. Enclosure 80 houses many stacks of load coils. Leads 82 from all load coils permit the load coils to be connected to conductors of a telephone line. After all the stacks of load coils are placed within enclosure 80, the enclosure is filled with a potting compound.

Ideally, conductors, for example 72 and 73 from load coil of FIG. 7, should be provided with sufficient and proper slack. This is necessary to prevent forces caused by expansion and contraction of the potting compound from severing conductors 72 and 73, and creating an open electrical circuit, when the potting compound is exposed to extreme low or high temperatures. Sometimes, however, sufficient and proper amount of slack might not be provided in the conductor. In order to avoid such failures, after the stacks of load coils have been assembled within enclosure 80, enclosure is first filled with a granular substance prior to pouring the potting compound as in the case of the terminal block hereinabove. Many other electrical devices, likewise, embedded in a potting compound for protection against moisture may be subjected to open circuits caused by conductors being severed or conductor connecting terminals damaged by forces from expansion or contraction of the potting compound when subjected to extreme temperatures.

## Claims

1. Apparatus including at least one electrical conductor connected to at least one electrical device
**CHARACTERIZED IN THAT**
the connection is surrounded by a mixture of an insulative granular substance and a potting compound, the potting compound filling the interstices of the granular substance.

2. The apparatus of claim 1 wherein the granular substance is quartz.

3. The apparatus of claim 1 wherein the granular substance is quartz that has been heated and then coated with a ceramic.

4. The apparatus of claim 1 wherein the potting compound is a polyurethane.

5. The apparatus of claim 4 wherein the polyurethane comprises a resin and a hardening substance.

6. An improved method of making an apparatus comprising at least one electrical conductor connected to at least one electrical device embedded in a potting compound, the improvement comprising the step of
filling the space surrounding the connection of the electrical conductor to the electrical device with a mixture of an insulative granular substance and the potting compound, the potting compound filling the interstices of the granular substance.

7. The method of claim 6 wherein the granular substance is quartz.

8. The method of claim 6 comprising the steps of
filling the space surrounding the connection with the insulative granular substance, the granular substance covering at least the connection, and
pouring the potting compound over the granular substance to fill the interstices of the granular substance.

9. The method of claim 6 wherein the potting compound is a polyurethane.

10. The method of claim 9 wherein the polyurethane comprises a resin and a hardening substance.

FIG. 1

FIG. 2

FIG. 3

31

30

23

18

16

23

18

10

11

# FIG.4

FIG. 5

FIG. 6

FIG.7

*FIG.8*

81

82

71

80